# EUROPÄISCHE PATENTSCHRIFT

(11) **EP 1 643 844 B1**
(45) Veröffentlichungstag und Bekanntmachung des Hinweises auf die Patenterteilung: **03.10.2007**
(21) Anmeldenummer: 04763052.0
(22) Anmeldetag: 30.06.2004
(51) Int. Cl.: A22C 13/00, B29C 47/00

(54) **VERFAHREN UND VORRICHTUNG ZUR HERSTELLUNG EINES NAHTLOSEN ESSBAREN CELLULOSESCHLAUCHS**
METHOD AND DEVICE FOR PRODUCING A SEAMLESS EDIBLE CELLULOSE CASING
PROCEDE ET DISPOSITIF POUR PRODUIRE UN TUBE SOUPLE EN CELLULOSE COMESTIBLE SANS SOUDURE

(30) Priorität: 04.07.2003 DE 10330292
(43) Veröffentlichungstag der Anmeldung: 12.04.2006
(73) Patentinhaber: Kalle GmbH, 65203 Wiesbaden (DE)
(72) Erfinder: GORD, Herbert, 55218 Ingelheim (DE); HAMMER, Klaus-Dieter, 55120 Mainz (DE); NEEFF, Rainer, 65203 Wiesbaden (DE); BERGHOF, Klaus, 07407 Rudolstadt-Schwarza (DE); EILERS, Markus, 49835 Wietmarschen-Lohne (DE); TAEGER, Eberhard, 07407 Weissbach (DE)
(74) Vertreter: Zounek, Nikolai
(86) Internationale Anmeldenummer: PCT/EP2004/007084
(87) Internationale Veröffentlichungsnummer: WO 2005/002346

(56) Entgegenhaltungen:
- EP-A- 0 662 283
- EP-A- 0 899 076
- US-A- 2 757 495
- US-A- 3 427 169
- US-A- 4 396 039

## Beschreibung

Die Erfindung betrifft ein Verfahren zur Herstellung eines nahtlosen essbaren Celluloseschlauchs aus nicht-derivatisierter Cellulose, bei dem eine Lösung der nicht-derivatisierten Cellulose in tertiärem Amin-N-oxid, von Zusätzen und Wasser aus einer Ringdüse als Schlauch extrudiert und nach unten durch einen Luftspalt in ein Wasserbad geführt wird, um die Cellulose zu verfestigen und Amin-N-oxid aus der Cellulose austreten zu lassen, des weiteren der Celluloseschlauch aus dem Wasserbad herausgeführt wird, und eine Vorrichtung zur Herstellung eines derartigen Celluloseschlauchs.

Aus der EPA 0 899 076 sind ein Verfahren und eine Vorrichtung zur Herstellung eines nahtlosen Folienschlauchs auf Cellulosebasis durch Extrudieren einerwässrigen CelluloseN-Methyl-Morpholin-N-oxid (NMMO)-Lösung durch eine Ringdüse in eine Spinnkufe bekannt, in der sich ein Spinnbad befindet. Zur Vermeidung von Verklebungen auf der Innenseite wird der Schlauch durch Aufrechterhalten eines Gasinnendrucks sowie durch Einleiten von Wasser in zylindrischer Form gehalten. Der Schlauch kann auf diese Weise nahe dem Boden des Spinnbadbehälters über eine Walze umgelenkt und nach oben abgezogen werden. Auf der Abzugswalze wird der Schlauch flachgelegt und einem Reinigungsprozess zugeführt. Dabei ist es erforderlich, das sich im Schlauchinneren ansammelnde Gemisch aus NMMO und Wasser zu entfernen. Dies geschieht durch Behandlung des Schlauchs mit wässrigen Bädern unterschiedlicher Temperatur und Zusammensetzung, mit denen der Schlauch im Gegenstromprinzip beaufschlagt wird. Am Ende einer Behandlungsstrecke ist die Innenseite des Schlauchs durch Difusionsprozesse von noch enthaltenen flüssigen Verunreinigungen befreit. Den Abschluss der Nassbehandlung bildet ein Tauchbad, das eine wässrige Lösung von Glycerin enthält. Durch geeignete Konzentration und Aufenthaltszeit wird der Schlauch gezielt plastifiziert, indem er einen bestimmten Glyceringehalt aufnimmt, wobei die exakte Einhaltung des Glyceringehaltes für die problemlose spätere Verarbeitung des Schlauchs wesentlich ist. Nach dem Verlassen der Plastifizierstufe hat sich im Allgemeinen im Schlauchinneren eine Mischung aus eingeschlepptem Wasser und Glycerin gebildet. Diese Mischung sammelt sich beim Abquetschen vor dem Trocknungsvorgang im Schlauchinneren an, wodurch der Trocknungsprozess verzögert und die mechanischen Eigenschaften des Schlauchs im Hinblick auf Dehnbarkeit und Festigkeit nachteilig beeinflusst werden.

Aus der WO03/000060 A1 ist ein cellulosehaltiger ess- bzw. kaubarer Schlauch bekannt, der nach dem NMMO-Verfahren hergestellt ist. Dieser Schlauch enthält neben Cellulose noch mindestens ein gelöstes Protein sowie mindestens einen ungelösten Füllstoff. Zur Herstellung einer essbaren bzw. kaubaren Schlauchhülle werden die Cellulose und das gegebenenfalls vorvernetzte Protein in wässrigem NMMO gelöst, die Lösung mit einem Füllstoff vermischt und die dabei entstehende Suspension extrudiert. Die Suspension wird dabei zur Herstellung von nahtlosen Schlauchhüllen durch eine Ringdüse extrudiert. Die einzelnen Verfahrensschritte entsprechen weitgehend dem Verfahren gemäß der zuvor angeführten EP-A 0 899 076.

Das Protein ist bevorzugt ein natürliches globuläres Protein, insbesondere Casein (Milcheiweiß), Sojaprotein, Gluten (Weizenprotein), Zein (Maisprotein), Ardein (Erdnussprotein) oder Erbsenprotein. Prinzipiell geeignet ist jedes Protein, das zusammen mit der Cellulose in NMMO-Monohydrat löslich ist. Der Anteil des mindestens einen Proteins beträgt im Allgemeinen 5 bis 50 Gew.-%, bevorzugt 8 bis 45 Gew.-%, jeweils bezogen auf das Trockengewicht der Schlauchhülle, d. h. das Gewicht der wasser- und glycerinfreien Schlauchhülle. Um die Wasserlöslichkeit des Proteins herabzusetzen oder aufzuheben, ist es zweckmäßig, das Protein vorher zu vernetzen. Das lässt sich beispielsweise erreichen durch Umsetzen des Proteins mit einem Aldehyd, mit Methylol, Epoxid und/oder Enzym. Die Begriffe "Aldehyd", "Methylol" usw. schließen dabei Verbindungen mit mehr als einer Carbaldehyd- bzw. Methylolgruppe ein.

So sind Dimethylolethylenhamstoff und Dialdehyde, insbesondere Glyoxal, Malonaldehyd, Succinaldehyd und Glutaraldehyd, besonders geeignete Vernetzer. Die Vernetzung erfolgt üblicherweise in Gegenwart von Lewis-Säuren; die Temperatur bei der Umsetzung beträgt allgemein von 0 bis 160 °C. Bei der Vernetzung reagieren nicht nur die freien Aminogruppen und die etwa vorhandenen Säureamidgruppen des Proteins, sondern auch die Iminogruppen der Peptidbindungen und Hydroxygruppen des Serins. Ein vernetzend wirkendes Enzym ist beispielsweise Transglutaminase. Der Anteil an Vernetzer(n) ist abhängig von dessen Art. Allgemein beträgt er 0,5 bis 5,0 Gew.-%, bevorzugt 1,0 bis 3,0 Gew.-%, jeweils bezogen auf das Gewicht des Proteins.

Eine Vernetzung kann auch nachträglich erfolgen. Beispielsweise kann in der letzten Kufe zusammen mit dem sekundären Weichmacher - das ist allgemein Glycerin - ein toxikologisch unbedenkliches Vernetzungsmittel auf die Schlauchhülle aufgebracht werden. Bevorzugte Vernetzungsmittel sind Citral, Tannin, Zuckerdialdehyd, Dialdehyd-Stärke, Karamel und epoxidiertes Leinöl. Die Auftragsmenge wird so gesteuert, dass die Schlauchhülle anschließend etwa 0,5 bis 5 Gew.-%, bezogen auf ihr Trockengewicht, an Vernetzungsmittel enthält. Die eigentliche Vernetzung erfolgt dann beim nachfolgenden Trocknen und beim Lagern der Schlauchhülle.

Die Füllstoffe sollen sich in der NMMO-Spinnlösung möglichst wenig lösen. In NMMO unlösliche Füllstoffe können bereits der Maische hinzugefügt werden, bevor Wasser unter vermindertem Druck abdestilliert wird. Füllstoffe, die eine gewisse Löslichkeit in NMMO aufweisen, werden zweckmäßig erst unmittelbar vor der Extrusion mit der Spinnlösung vermischt. Falls erforderlich, kann die Löslichkeit der Füllstoffe in NMMO-Monohydrat durch Vorvernetzung reduziert werden. Wie die Proteine unterbrechen die Füllstoffe die Struktur der Cellulose. Die Dehnbarkeit in Querrichtung wird z. T. erheblich erhöht und die Festigkeit (Reißkraft, Platzdruck) reduziert. Besonders geeignete organische Füllstoffe sind Kleie, insbesondere Weizenkleie, gemahlene Naturfasern, insbesondere gemahlene Flachs-, Hanf- oder Baumwollfasern, Baumwoll-Linters, Chitosan, Guarkernmehl, Johannisbrotkernmehl, oder mikrokristalline Cellulose. Anstelle der organischen Füllstoffe oder zusätzlich dazu können auch feinteilige anorganische Füllstoffe zum Einsatz kommen. Beispiele dafür sind gemahlenes Calciumcarbonat oder pulverförmiges SiO₂. Der Anteil an Füllstoff(en) beträgt allgemein 3 bis 60 Gew.-%, bevorzugt 4 bis 50 Gew.-%, jeweils bezogen auf das Trockengewicht der Schlauchhülle.

Um gut kaubar zu sein, darf die Schlauchhülle nur gering nassfest und auch nicht sehr zäh sein. Durch den Zusatz von hydrophilen Additiven lässt sich die Kaubarkeit noch weiter verbessern. Die hydrophilen Additive sind in der NMMO-Spinnlösung ebenfalls löslich. Besonders geeignet sind Homopolysaccharide und Derivate davon (insbesondere Ester und Ether), wie Stärke, Stärkeacetat, Chitin, Chitosan oder Pektin; Heteropolysaccharide und Derivate davon, wie Carrageenan, Xanthan, Alginsäure und Alginate; schließlich auch toxikologisch unbedenkliche synthetische Polymere oder Copolymere, wie Polyvinylpyrrolidon, Polyvinylalkohol oder-Polyethylenoxide. Der Anteil der hydrophilen Additive beträgt allgemein etwa 0,5 bis 15 Gew.-%, bevorzugt 1 bis 10 Gew.-%, jeweils bezogen auf das Gesamtgewicht der Schlauchhülle.

Noch weiter modifiziert werden kann die Schlauchhülle mit Hilfe von primären Weichmachern oder Gleitmitteln. Das sind beispielsweise Triglyceride, Wachse, wie Schellack, Kohlenwasserstoffe, wie essbare Naturkautschuke, oder Paraffine.

Zweckmäßig enthält die Schlauchhülle auch noch einen sekundären Weichmacher, insbesondere Glycerin. Der sekundäre Weichmacher wird, wie allgemein üblich, in einer Weichmacherkufe unmittelbar vor dem Trocknen der Schlauchhülle zugesetzt.

Aus der DE 44 21 482 C2 ist ein Verfahren zur Herstellung orientierter Cellulosefolien durch Verspinnen von in Aminoxiden gelöster nicht-derivatisierter Cellulose über eine Ringdüse in ein Fällungsbad bekannt. Hierbei wird die Celluloselösung über die Ringdüse und einen äußeren Luftspalt nach unten in das Fällungsbad extrudiert, wobei ein Aufblasen des Folienschlauchs mit einem Treibgas, insbesondere mit Luft, erfolgt. Die Cellulosefolie kann als biologisch abbaubares und kompostierbares Material mit weitem Einsatzbereich beispielsweise als Verpackungsmaterial wie Verpackungsfolien, Beutel oder Wursthüllen eingesetzt werden.

In der EP-B 0 662 283 ist ein Verfahren zur Herstellung von Nahrungsmittelhüllen aus nicht-derivatisierter Cellulose beschrieben. Hierbei wird eine Lösung, die nichtderivatisierte Cellulose, teriäres Amin-N-oxid und Wasser enthält, bei einer Temperatur von weniger als 116 °C durch einen Gießspalt nach unten extrudiert, um einen extrudierten Schlauch zu bilden, der vor dem Eintritt in ein Wasserbad durch einen Luftabschnitt geführt ist. Im Wasserbad wird die Cellulose verfestigt und Aminoxid von dem extrudierten Schlauch entfernt. Der extrudierte Schlauch tritt als nasser Schlauch aus dem Wasserbad aus, wird aufgebläht und getrocknet, um einen Celluloseschlauch zu bilden. Bei dem tertiären Amin-N-oxid handelt es sich um N-Methyl-Morpholin-N-oxid.

Aufgabe der Erfindung ist es, die wasserhaltige Schlauchhülle nach dem Austritt aus den Waschzonen und der Plastifizierungszone vor der Endtrocknung ausreichend zu stabilisieren, um die Schlauchfestigkeit zu erhöhen, die Kaliberkonstanz einzuhalten und den Verlauf der Druck-Dehnungskurve flacher zu gestalten.

Diese Aufgabe wird durch ein Verfahren der eingangs beschriebenen Art in der Weise gelöst, dass der Celluloseschlauch durch Besprühen mit erwärmtem Wasser gereinigt wird, wobei er während des Besprühens schräg nach oben transportiert wird, danach wird der Schlauch durch zumindest zwei Waschstrecken und eine Plastifizierungsstrecke geleitet und nach dem Austritt aus der Plastifizierungsstrecke als nasser Schlauch in flachgelegtem Zustand vorgetrocknet, bevor er aufgeblasen auf seine Endfeuchte getrocknet wird. Dabei wird verfahrensgemäß der Cellulosschlauch auf eine Feuchte von 30 bis 70 % der Feuchte des nassen Schlauchs vorgetrocknet. Insbesondere wird der Celluloseschlauch auf eine Feuchte von 40 bis 60 % der Feuchte des nassen Schlauchs vorgetrocknet.

In weiterer Ausgestaltung des Verfahrens wird auf die Schlauchinnenseite des vorgetrockneten Schlauchs eine Imprägnierungslösung aufgebracht. Durch das Vortrocknen wird der Schlauch geschrumpft und seine Dehnfähigkeit verringert.

In Ausführung des erfindungsgemäßen Verfahrens durchläuft der Celluloseschlauch eine Vortrocknungszone zumindest zweimal, indem er an einem Ende der Vortrocknungszone um 180° umgelenkt wird.

Die weitere Ausgestaltung des Verfahrens ergibt sich aus den Patentansprüchen 7 bis 11.

Eine Vorrichtung zur Herstellung eines nahtlosen essbaren Celluloseschlauchs aus nicht-derivatisierter Cellulose, die aus einer Ringdüse extrudiert und durch eine Luftspalt in ein Wasserbad eingeleitet ist, in diesem umgelenkt und herausgeführt ist, über ein Förderband durch eine erste und zweite Waschstrecke hindurch in eine Plastifizierungsstrecke geführt ist, zeichnet sich dadurch aus, dass der Celluloseschlauch von der Plastifizierungsstrecke in einen Vortrockner transportierbar ist, der einem Haupttrockner vorgeschaltet ist und dass der Vortrockner senkrecht oder waagerecht angeordnet ist. Zweckmäßigerweise hat der Vortrockner eine Länge von bis zu-12 m.

In Ausgestaltung der Vorrichtung ist nahe an einer Austrittsöffnung des Vortrockners eine Umlenkrolle angeordnet, über die der Celluloseschlauch nach dem Durchlaufen des Vortrockners umläuft und um 180 ° umgelenkt den Vortrockner ein weiteres Mal passiert und durch eine Eintrittsöffnung verlässt.

Weitere Ausgestaltungsmerkmale der Vorrichtung ergeben sich aus den Patentansprüchen 15 bis 21.

Mit der Erfindung wird der Vorteil errreicht, dass dem Schlauch nach dem Verlassen der Plastifizierungsstrecke, d. h. des Glycerinbades, durch die Vortrocknung der Großteil der im nicht aufgeblasenem, flachgelegtem Zustand des Schlauchs enthaltene Innenflüssigkeit entzogen wird. Dadurch kann das Schlauchmaterial in Querrichtung unbeeinflusst von Innenflüssigkeit schrumpfen, wodurch-die mechanischen-Eigenschaften, insbesondere die Schlauchfestigkeit erhöht wird und darüber hinaus die Druck-Dehnungskurve abgeflacht wird, so dass das Schlauchmaterial gegenüber einem nicht vorgetrockneten Material einen bis zu 30 % höheren Platzdruck aufweist.

Die Vorrichtung nach der Erfindung wird an Hand der Zeichnungen näher beschrieben. Es zeigen:
- Figur 1: ein schematisches Diagramm der Behandlungsstrecken eines Schlauches aus nicht-derivatisierter Cellulose,

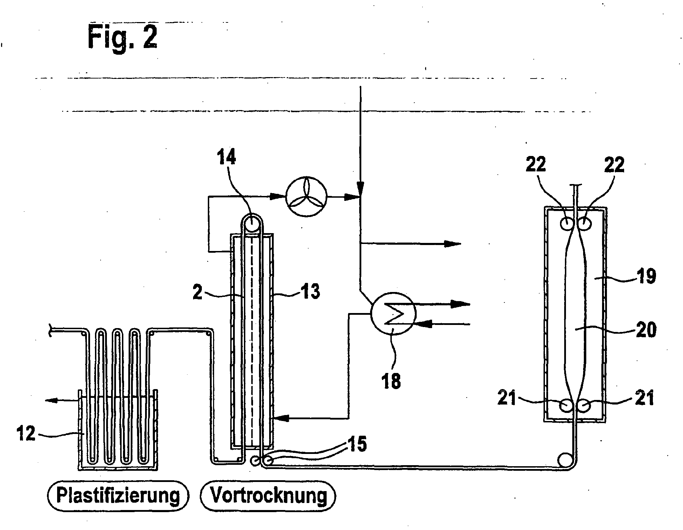

- Figur 2: in einem Ausschnitt der Fig. 1 eine Plastifizierungsstreclce, einen vertikalen Vortrockner und einen Haupttrockner, und
- Figur 3: eine gegenüber Fig. 1 abgewandelte Ausführungsform, mit einem horizontalen Vortrockner und dem Haupttrockner.

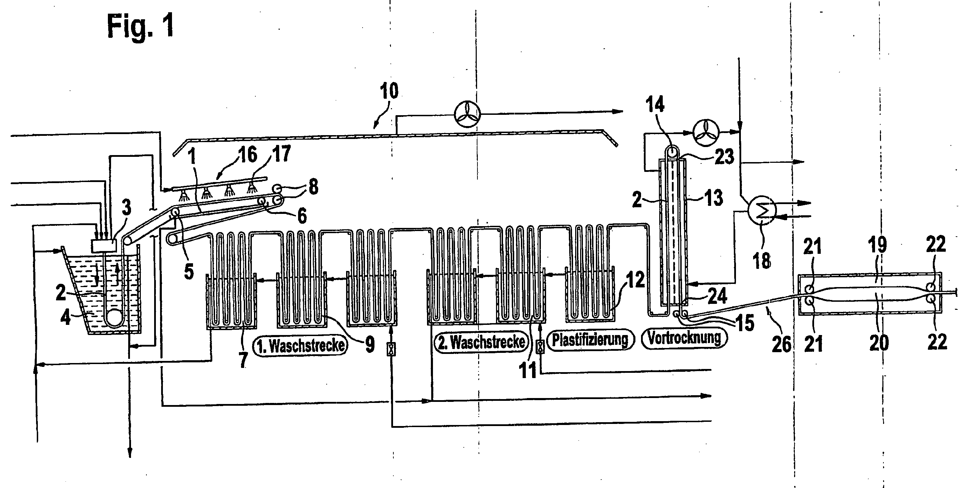

Wie in Fig. 1 dargestellt, wird ein nahtloser essbarer Celluloseschlauch 2 aus nicht-derivatisierter Cellulose aus einer Ringdüse 3 extrudiert und durch einen Luftspalt in ein Wasserbad 4 eingeleitet. Der Celluloseschlauch 2 wird in dem Wasserbad nahe dem Boden umgelenkt und aus dem Wasserbad herausgeführt und über ein schräg nach oben geneigtes Förderband 1 durch eine erste Waschstrecke 9, die beispielsweise aus drei Waschkufen besteht und eine zweite Waschstrecke 11 aus zwei Waschkufen in eine Plastifizierungsstrecke 12 geführt. Oberhalb des Förderbandes 1 befindet sich eine Besprühvorrichtung 16 mit Sprühdüsen 17, durch die der Celluloseschlauch mit erwärmtem Wasser besprüht und gereinigt wird. Am oberen Ende des Förderbandes 1 befindet sich ein Quetsch- und Umlenkwalzenpaar 6, 8, durch das der Celluloseschlauch hindurchgeführt und schräg nach unten in Richtung der ersten Waschstrecke umgelenkt wird.

Nach dem Verlassen der Plastifizierungsstrecke 12, die aus einer Glycerinkufe besteht, die eine Mischung aus Wasser und Glycerin enthält, wird der flachgelegte Celluloseschlauch ohne Abquetschen um 90° nach oben umgelenkt. Die an seiner Außenseite anhaftende Flüssigkeit kann durch geeignete Abstreifer, die nicht gezeigt sind, zurückgehalten bzw. abgestreift werden. Als raumsparend und effizient hat sich eine senkrechte Anordnung eines Vortrockners 13 erwiesen. Der Vortrockner besteht aus einem Trockenrohr, an dessen oberem Ende eine Umlenkrolle 14 angebracht ist, um die der Celluloseschlauch 2 um 180 ° umgelenkt vertikal nach unten durch den Vortrockner 13 geführt wird, d. h. ein weiteres Mal den Vortrockner 13 durchläuft. Bei dem Trockenrohr handelt es sich um ein isoliertes Rohr, dem durch Wärmetauscher erhitzte Luft in genau dosierter Menge und konstanter Temperatur von bis zu 130 °C zugeführt wird. Die vertikale Anordnung des Vortrockners 13 ergibt einen natürlichen Rückfluß der im Schlauchinneren des Celluloseschlauchs 2 vorhandenen Lösung, wobei die zu entfernende Flüssigkeitsmenge gleichmäßig über den Schlauchumfang verteilt ist. Durch die vertikale Anordnung der Vortrockners 13 wird der Platzbedarf innerhalb der Produktionsanlage so gering wie nur möglich gehalten. Der Vortrockner 13 kann bei horizontaler Ausführung eine Länge von bis zu 12 m haben. Die Umlenkrolle 14 ist nahe an einer oberen Austrittsöffnung 23 des Vortrockners angeordnet. Nachdem der Celluloseschlauch 2 durch die Umlenkrolle 14 um 180° umgelenkt ist und den Vortrockner 13 ein zweites Mal passiert hat, tritt er durch eine untere Eintrittsöffnung 24 aus und läuft durch ein Rollenpaar 15 hindurch. Eine der Rollen des Rollenpaares 15-lenkt-den Celluloseschlauch um etwas mehr als 90° in Richtung eines horizontal angeordneten Haupttrockners 19 um. An einer durch den Pfeil 26 markierten Stelle kann in das Innere des Celluloseschlauchs 2 vor dessen Eintritt in den Haupttrockner 19 eine Imprägnierung eingebracht werden. Zu diesem Zweck wird der Transport des vorgetrockneten Celluloseschlauchs von Zeit zu Zeit unterbrochen, um die Imprägnierungslösung in den Schlauch einzubringen. Durch die Imprägnierung können unterschiedliche Zusatzeffekte erzielt werden, wie eine bessere Bräthaftung oder alternativ eine leichtere Schälbarkeit der Schlauchhülle von dem Wurstbrät, eine Vorräucherung der Schlauchhülle durch ein Flüssigraucharoma und eine Hydrophobierung der Schlauchhülle um die Wasseraufnahme während des Füllprozesses mit dem Wurstbrät zu verzögern. Durch die Vortrocknung mit teilweise erfolgtem Wasserentzug ist die Aufnahmefähigkeit des Schlauches für die Imprägnierlösung bzw. -flüssigkeit größer als ohne Vortrocknung. Der geringe Wasseranteil im Schlauch bewirkt, dass die Konzentration der Imprägnierlösung länger konstant bleibt, so dass Unterbrechungen des Schlauchtransportes zur Korrektur der Imprägnierung selten werden. Darüber hinaus wird durch die Vortrocknung in flachgelegtem Zustand des Schlauches vermieden, dass bereits nach dem Austritt des Schlauches aus der Plastifizierungsstrecke eine Unterbrechung des Schlauchtransportes vorgenommen werden muss, um die Flüssigkeit im Inneren des Schlauchs zu entfernen. Dadurch wird der Arbeitsaufwand und auch der Abfall an Schlauchmaterial, da der Schlauch bei jeder Unterbrechung durchschnitten werden muss, verringert. Des weiteren sammelt sich durch die Vortrocknung kein Flüssigkeit vor einem Quetschwalzenpaar 21 des Haupttrockners 19 an. Ohne Vortrocknung kommt es üblicherweise zu einer derartigen Flüssigkeitsansammlung, so dass der kontinuierliche Transport des Schlauchs gestoppt werden muss, um die Flüssigkeitsansammlung durch Öffnen des Schlauchs zu entfernen. Der im Vortrockner 13 in Bezug auf seinen Querschnitt leicht geschrumpfte Schlauch 2 besitzt eine geringere Dehnung als vor dem Vortrocknen. Das führt dazu, dass beim Aufblasen des flachgelegten Schlauchs, was von dem Ende des Haupttrockners her während des Haupttrocknungsvorganges geschieht, keine so starke Deformation des Schlauchstückes, das direkt hinter dem Quetschwalzenpaar 21 nach dem Eintritt in den Haupttrockner sich befindet, erfolgt. Dadurch wird ein kurzfristiges Überkaliber des aufgeblasenen Schlauchs 20 vermieden. Da durch die Vortrocknung die Dehnbarkeit des aufgeblasenen Schlauchs 20 im Haupttrockner 19 insgesamt geringer ist als ohne Vortrocknung, kann zum Aufblasen des Schlauchs ein höherer Luftdruck angewendet werden, da die Gesamtstabilität des Schlauchs durch die Vortrocknung gesteigert wurde. Der Platzdruck des vorgetrockneten Schlauchs ist um bis zu 30 % höher als der eines nicht vorgetrockneten Schlauchs. Durch den höheren Luftdruck erfolgt eine stärkere Ausreckung des Schlauchs 20 in Querrichtung und damit eine Abflachung seiner Dehnkurve, so dass beim Füllen des Schlauchs mit Wurstbrät ein sehr konstantes Kaliber eingehalten werden kann. Der Haupttrockner 19 enthält tangential und radial ausgerichtete Luftdüsen, deren Luftstrahlen den aufgeblasenen Celluloseschlauch 20 während des Trocknungsvorgangs in Schwebe halten.

In dem Vortrockner 13 wird erhitzte Luft auf den flachgelegten Celluloseschlauch 2 eingeblasen. Die eingeblasene Luft ist auf eine Temperatur bis zu 130 °C erhitzt. Im Haupttrockner 19 wird der flachgelegte Celluloseschlauch 2 zwischen den beiden Quetschwalzenpaaren 21, 22 zu dem rohrförmigen Celluloseschlauch 20 mit erhitzter Luft aufgeblasen. Der rohrförmige Celluloseschlauch 20 wird im aufgeblasenen Zustand auf seine Endfeuchte von bis zu 10 % der Feuchte des nassen Celluloseschlauchs getrocknet und auf sein Endkaliber geschrumpft.

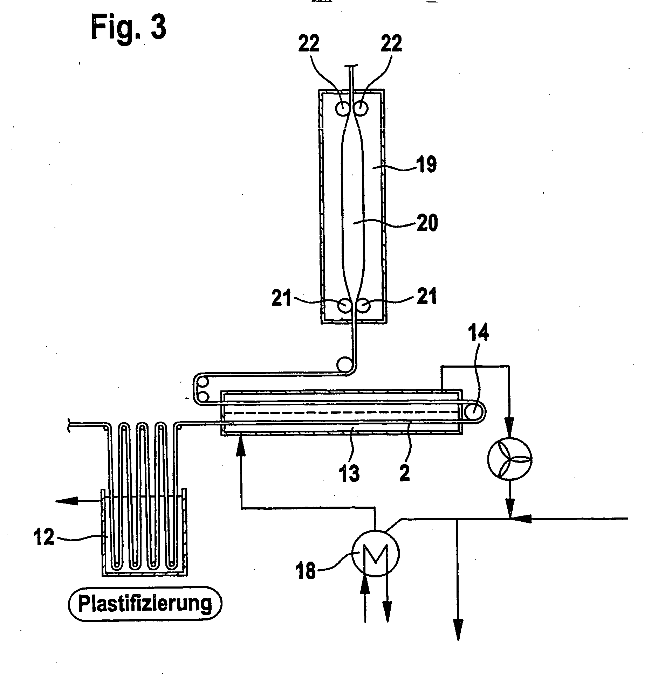

In Fig. 3 ist eine weitere Ausführungsform der Vorrichtung gezeigt, bei der der Vortrockner 13 horizontal angeordnet ist. Der aus der Plastifizierungsstrecke 12 austretende Celluloseschlauch 2 wird horizontal umgelenkt und in den Vortrockner 13 eingeführt. Am rechten Ende des Vortrockners 13 befindet sich die Umlenkrolle 14, um die der Celluloseschlauch 2 um 180° umgelenkt wird und ein zweites Mal den Vortrockner 13 passiert und am linken Ende horizontal austritt. Danach wird der Celluloseschlauch 2 um zwei Rollen um 180° umgelenkt und gelangt zu einer weiteren Umlenkrolle, um die er um 90 ° umgelenkt vertikal nach oben durch den Haupttrockner 19 hindurchgeführt wird. Im Haupttrockner 19 befinden sich zwei Quetschwalzenpaare 21 und 22, zwischen denen der Celluloseschlauch zu dem rohrförmigen Celluloseschlauch 20 mittels Luft aufgeblasen wird.

Die Erfindung wird an Hand der nachfolgend beschriebenen Ausführungsbeispiele näher erläutert.

### Beispiel 1

Ein nach dem voranstehend beschriebenen NMMO-Verfahren hergestellter essbarer Celluloseschlauch aus nicht-derivatisierter Cellulose wird nach dem Reinigungsprozess durch ein Bad mit wässriger Glycerinlösung geführt. Die Konzentration der Glycerinlösung und die Durchlaufzeit des Celluloseschlauchs durch das Glycerinbad sind so bemessen, dass der Glyceringehalt im Celluloseschlauch 20 nach der Endtrocknung bis zu 18 % beträgt.

Nach dem Glycerinbad wird der Celluloseschlauch 2 in den senkrecht angeordneten Vortrockner 13 umgelenkt. Die Länge des Vortrockners 13 beträgt bis zu 10 m. Die Temperatur der eingeblasenen Luft im Vortrockner wird auf 120 °C eingeregelt. Die Länge des Vortrockners 13 und die Transportgeschwindigkeit des Celluloseschlauchs 2 sind so aufeinander abgestimmt, dass die Feuchte des Celluloseschlauchs 2 am Austritt 24 des Vortrockners 13 50 %, bezogen auf den nassen Celluloseschlauch, beträgt. Danach wird der vorgetrocknete Celluloseschlauch 2 dem Haupttrockner 19 zugeführt und dort zwischen den zwei Quetschwalzenpaaren 21, 22 in aufgeblasenem Zustand mit Heißluft auf eine Endfeuchte von bis zu 10 %, wiederum bezogen auf den nassen Celluloseschlauch, gebracht. Durch den Luftdruck im Schlauchinneren, wenn sich der aufgeblasene Celluloseschlauch 20 im Hauptrockner 19 befindet, wird das Endkaliber des Celluloseschlauchs 20 festgelegt. Der Platzdruck und der Dehnungsverlauf des Schlauchmaterials werden kontrolliert und dienen der internen Herstellungskontrolle nach DIN ISO 9002. Da die Druck-Dehnungskutve des vorgetrockneten Schlauchs flacher ist als diejenige eines nassen Schlauchs, wird gegenüber einem nicht vorgetrockneten Schlauch ein um 30 % höherer Platzdruck erreicht.

### Beispiel 2

Ein wie im Anwendungsfall des Beispiels 1 hergestellter und vorgetrockneter Celluloseschlauch 2 wird vor dem Durchlauf durch das Einlaufquetschenwalzenpaar 21 des Haupttrockners 20 mit einer Innenimprägnierung ausgerüstet. Die Feuchte des vorgetrockneten Celluloseschlauchs 2 wird auf 60 %, bezogen auf den nassen Celluloseschlauch, eingestellt. Der Imprägnierungswirkstoff wird in einer wässrigen Lösung in das Innere des Celluloseschlauchs eingefüllt, wobei die Imprägnierungslösung wesentlich gleichmäßiger auf die Innenseite des Celluloseschlauchs aufgezogen wird als bei einem nicht vorgetrockneten Celluloseschlauch. Darüber hinaus bleibt die Konzentration der im Celluloseschlauch vorhandenen Imprägnierungslösung wesentlich länger konstant, als dies ohne Vortrocknung der Fall wäre. Dies führt zu längeren Schlauch-stücken bzw. Schlauchabschnitten ohne Nachfüll-Unterbrechungen des Schlauchtransportes und damit zu geringem Arbeitsaufwand und weniger Abfall an Schlauchmaterial.

### Beispiel 3

Es wird ein gemäß Beispiel 1 hergestellter und vorgetrockneter Celluloseschlauch 2 mit einer wässrigen Lösung imprägniert, die 2 Gew.-% eines Distearyl-Diketens enthält. Diese Präparation führt zu einer verzögerten Wasseraufnahme während des späteren Füllprozesses mit Wurstbrät und zu einer verbesserten Kaliberkonstanz des Celluloseschlauchs 20.

Die wässrige Imprägnierlösung mit.2 Gew.-%eines Distearyl-Diketens findet allgemeine Anwendung bei der Imprägnierung von Celluloseschläuchen und ist weder auf das Beispiel 3 noch auf die Beispiele 1 und 2 beschränkt.

## Patentansprüche

1. Verfahren zur Herstellung eines nahtlosen essbaren Celluloseschlauchs aus nicht derivatisierter Cellulose, bei dem eine Lösung der nicht derivatisierten Cellulose in tertiärem Amin-N-oxid, von Zusätzen und Wasser aus einer Ringdüse als Schlauch extrudiert und nach unten durch einen Luftspalt in ein Wasserbad geführt wird, um die Cellulose sowie die Zusätze zu verfestigen und Amin-N-oxid aus der Cellulose austreten zu lassen, desweiteren der Celluloseschlauch aus dem Wasserbad herausgeführt wird, **dadurch gekennzeichnet, dass** der Celluloseschlauch durch Besprühen mit erwärmten Wasser gereinigt wird, wobei er während des Besprühens schräg nach oben transportiert wird, danach der Schlauch durch zumindest zwei Waschstrecken und eine Plastifizierungsstrecke geleitet und nach dem Austritt aus der Plastifizierungsstrecke als nasser Schlauch in flachgelegtem Zustand vorgetrocknet wird, bevor er aufgeblasen auf seine Endfeuchte getrocknet wird.

2. Verfahren nach Anspruch 1, **dadurch gekennzeichnet, dass** der Celluloseschlauch auf eine Feuchte von 30 bis 70 % der Feuchte des nassen Schlauchs vorgetrocknet wird.

3. Verfahren nach Anspruch 2, **dadurch gekennzeichnet, dass** der Celluloseschlauch auf eine Feuchte von 40 bis 60 % der Feuchte des nassen Schlauchs vorgetrocknet wird.

4. Verfahren nach einem der Ansprüche 1 bis 3, **dadurch gekennzeichnet, dass** auf die Schlauchinnenseite des vorgetrockneten Schlauchs eine Imprägnierungslösung aufgebracht wird.

5. Verfahren nach Anspruch 1, **dadurch gekennzeichnet, dass** der Schlauch durch das Vortrocknen geschrumpft und seine Dehnfähigkeit verringert wird.

6. Verfahren nach einem der Ansprüche 1 bis 5, **dadurch gekennzeichnet, dass** der Celluloseschlauch eine Vortrocknungszone zweimal durchläuft, indem er an einem Ende der Vortrocknungszone um 180 ° umgelenkt wird.

7. Verfahren nach Anspruch 6, **dadurch gekennzeichnet, dass** der Celluloseschlauch die Vortrocknungszone senkrecht durchläuft.

8. Verfahren nach Anspruch 6, **dadurch gekennzeichnet, dass** der Celluloseschlauch die Vortrocknungszone waagerecht durchläuft.

9. Verfahren nach Anspruch 1, **dadurch gekennzeichnet, dass** die Vortrocknung in einer Vortrocknungszone mit einer Länge von bis zu 12 m stattfindet und dass mit Luft, die bis zu 130 °C heiß ist, vorgetrocknet wird.

10. Verfahren nach Anspruch 9, **dadurch gekennzeichnet, dass** die Laufgeschwindigkeit des Celluloseschlauchs, die Länge der Vortrocknungszone und die Temperatur der Luft derart aufeinander eingestellt werden, dass die Feuchte des vorgetrockneten Celluloseschlauchs beim Austritt aus der Vortrocknungszone 40 bis 60 % der Feuchte des nassen Celluloseschlauchs beträgt.

11. Verfahren nach Anspruch 1, **dadurch gekennzeichnet, dass** der vorgetrocknete Celluloseschlauch in aufgeblasenem Zustand zwischen zwei Quetschwalzenpaaren mit Heißluft auf eine Endfeuchte von bis zu 10 % der Feuchte des nassen Celluloseschlauchs getrocknet wird.

12. Vorrichtung zur Herstellung eines nahtlosen essbaren Celluloseschlauchs (2) aus nicht derivatisierter Cellulose, der aus einer Ringdüse (3) extrudiert und durch einen Luftspalt in ein Wasserbad (4) eingeleitet ist, in diesem umgelenkt und herausgeführt ist, über ein Förderband (1) durch eine erste und zweite Waschstrecke (9, 11) hindurch in eine Plastifizierungsstrecke (12) geführt ist, **dadurch gekennzeichnet, dass** der Celluloseschlauch (2) von der Plastifizierungsstrecke (12) in einen Vortrockner (13) transportierbar ist, der einem Haupttrockner (19) vorgeschaltet ist, und dass der Vortrockner (13) senkrecht oder waagerecht angeordnet ist.

13. Vorrichtung nach Anspruch 12, **dadurch gekennzeichnet, dass** der Vortrockner (13) eine Länge von bis zu 12 m hat.

14. Vorrichtung nach Anspruch 13, **dadurch gekennzeichnet, dass** nahe an einer Austrittsöffnung (23) des Vortrockners (13) eine Umlenkrolle (14) angeordnet ist, über die der Celluloseschlauch (2) nach dem Durchlaufen des Vortrockners (13) umläuft und um 180° umgelenkt den Vortrockner (13) ein weiteres Mal passiert und durch eine Eintrittsöffnung (24) verlässt.

15. Vorrichtung nach Anspruch 14, **dadurch gekennzeichnet, dass** der Celluloseschlauch (2) nach dem Austritt aus dem Vortrockner (13) zwischen einem Rollenpaar (15) hindurchgeführt ist und um eine der Rollen des Rollenpaars (15) in Richtung Haupttrockner (19) umgelenkt ist.

16. Vorrichtung nach Anspruch 13, **dadurch gekennzeichnet, dass** in den Vortrockner (13) erhitzte Luft auf den flachgelegten Celluloseschlauch (2) einblasbar ist.

17. Vorrichtung nach Anspruch 16, **dadurch gekennzeichnet, dass** die eingeblasene Luft auf eine Temperatur bis zu 130 °C erhitzt ist.

18. Vorrichtung nach Anspruch 15, **dadurch gekennzeichnet, dass** in das Innere des Celluloseschlauchs (2) vor dessen Eintritt in den Haupttrockner (19) eine Imprägnierung einbringbar ist.

19. Vorrichtung nach Anspruch 12, **dadurch gekennzeichnet, dass** im Haupttrockner (19) zwei Quetschwalzenpaare (21, 22) angeordnet sind, und dass der flachgelegte Celluloseschlauch (2) zwischen den beiden Quetschwalzenpaaren (21, 22) zu einem rohrförmigen Celluloseschlauch (20) mit erhitzter Luft aufblasbar ist.

20. Vorrichtung nach Anspruch 19, **dadurch gekennzeichnet, dass** der rohrförmige Celluloseschlauch (20) in aufgeblasenem Zustand auf seine Endfeuchte von bis zu 10 % der Feuchte des nassen Celluloseschlauchs (2) trockenbar und auf sein Endkaliber schrumpfbar ist.

21. Vorrichtung nach Anspruch 18, **dadurch gekennzeichnet, dass** das Innere des Celluloseschlauchs (2) mit einer wässrigen Imprägnierlösung mit 2 Gew.-% eines Distearyl-Diketen imprägniert ist.

## Claims

1. A method for producing a seamless edible cellulose tubing from underivatized cellulose in which a solution of the underivatized cellulose in tertiary amine N-oxide, additives and water is extruded from an annular die as tubing and conducted downward through an air gap into a water bath, in order to solidify the cellulose and the additives and allow amine N-oxide to escape from the cellulose, in addition, the cellulose tubing is conducted out of the water bath, which comprises cleaning the cellulose tubing by spraying with heated water, the cellulose tubing being transported upward at an incline during the spraying, thereafter the tubing is passed through at least two wash sections and one plasticizing section and after exit from the plasticizing section is predried as wet tubing in the laid-flat state before it is dried, in the blown state, to its final moisture.

2. The method as claimed in claim 1, wherein the cellulose tubing is predried to a moisture of 30 to 70 % of the moisture of the wet tubing.

3. The method as claimed in claim 2, wherein the cellulose tubing is predried to a moisture of 40 to 60 % of the moisture of the wet tubing.

4. The method as claimed in one of claims 1 to 3, wherein an impregnation solution is applied to the tubing inside of the predried tubing.

5. The method as claimed in claim 1, wherein the tubing is shrunk by the predrying and its extensibility is decreased.

6. The method as claimed in one of claims 1 to 5, wherein the cellulose tubing passes through a predrying zone two times, by being turned round by 180° at one end of the predrying zone.

7. The method as claimed in claim 6, wherein the cellulose tubing passes vertically through the predrying zone.

8. The method as claimed in claim 6, wherein the cellulose tubing passes horizontally through the predrying zone.

9. The method as claimed in claim 1, wherein the predrying takes place in a predrying zone of a length of up to 12 m and wherein predrying is carried out by air which is at a temperature up to 130 °C.

10. The method as claimed in claim 9, wherein the running speed of the cellulose tubing, the length of the predrying zone and the temperature of the air are adjusted to one another in such a manner that the moisture of the predried cellulose tubing at the exit from the predrying zone is 40 to 60 % of the moisture of the wet cellulose tubing.

11. The method as claimed in claim 1, wherein the predried cellulose tubing is dried in the inflated state between two pinch-roll pairs by hot air to a final moisture of up to 10 % of the moisture of the wet cellulose tubing.

12. A device for producing a seamless edible cellulose tubing (2) made of underivatized cellulose which is extruded from an annular die (3) and introduced via an air gap into a water bath (4), is turned round in this and conducted out, conducted via a conveyor belt (1) through a first and second washing section (9, 11) into a plasticizing section (12), wherein the cellulose tubing (2) is transportable from the plasticizing section (12) into a predryer (13) which is provided upstream of a main dryer (19), wherein and the predryer (13) is arranged vertically or horizontally.

13. The device as claimed in claim 12, wherein the predryer (13) has a length of up to 12 m.

14. The device as claimed in claim 13, wherein, close to an exit orifice (23) of the predryer (13), there is arranged a guide roll (14) round which the cellulose tubing (2) runs after passing through the predryer (13) and, turned round through 180 passes the predryer (13) a further time and leaves via an exit orifice (24) .

15. The device as claimed in claim 14, wherein the cellulose tubing (2), after exit from the predryer (13), is conducted between a roll pair (15) and is turned round one of the rolls of the roll pair (15) in the direction of the main dryer (19).

16. The device as claimed in claim 13, wherein, in the predryer (13), heated air can be blown into the laid-flat cellulose tubing (2).

17. The device as claimed in claim 16, wherein the air which is blown in is heated to a temperature up to 130 °C.

18. The device as claimed in claim 15, wherein an impregnation can be introduced into the interior of the cellulose tubing (2) before its entry into the main dryer (19).

19. The device as claimed in claim 12, wherein two pinch-roll pairs (21, 22) are arranged in the main dryer (19), and wherein the laid-flat cellulose tubing (2) can be inflated between the two pinch-roll pairs (21, 22) by heated air to form a tubular cellulose tubing (20) .

20. The device as claimed in claim 19, wherein the tubular cellulose tubing (20) can be dried in the inflated state to its final moisture of up to 10 % of the moisture of the wet cellulose tubing (2) and can be shrunk to its final caliber.

21. The device as claimed in claim 18, wherein the interior of the cellulose tubing (2) is impregnated with an aqueous impregnation solution having 2 % by weight of a distearyl diketene.

## Revendications

1. Procédé de production d'une enveloppe tubulaire comestible sans ligne de joint, ladite enveloppe étant constituée de cellulose non dérivatisée et étant produite en extrudant une solution de ladite cellulose non dérivatisée dans du N-oxyde d'amine tertiaire, des adjuvants et de l'eau, l'extrusion étant effectuée à travers une filière annulaire pour obtenir ainsi une enveloppe tubulaire qui est ensuite tirée vers le bas pour être introduite, à travers une fente d'appel d'air, dans un bain d'eau pour ainsi solidifier la cellulose et les advujants et pour enlever le N-oxyde d'amine du cellulose, l'enveloppe tubulaire cellulosique étant ensuite sortie du bain d'eau, **caractérisé en ce que** l'enveloppe tubulaire cellulosique est nettoyée en l'aspergeant avec de l'eau chauffée, ladite enveloppe étant transportée de manière oblique vers le haut pendant qu'elle est aspergée, et qu'ensuite, l'enveloppe tubulaire traverse deux zones de lavage et une zone de plastification et qu'à la sortie de la zone de plastification, l'enveloppe qui se présente à l'état humide et plat est préséchée avant d'être gonflée et séchée jusqu'à ce qu'elle atteigne son taux d'humidité final.

2. Procédé selon la revendication 1, **caractérisé en ce que** l'enveloppe tubulaire cellulosique est préséchée à un taux d'humidité compris entre 30 et 70 % par rapport à l'humidité dans l'enveloppe tubulaire non-séchée.

3. Procédé selon la revendication 2, **caractérisé en ce que** l'enveloppe tubulaire cellulosique est préséchée à un taux d'humidité compris entre 40 et 60 % par rapport à l'humidité dans l'enveloppe tubulaire non-séchée.

4. Procédé selon une quelconque des revendications 1 à 3, **caractérisé en ce qu'**une solution d'imprégnation est appliquée à la face intérieure de l'enveloppe tubulaire préséchée.

5. Procédé selon la revendication 1, **caractérisé en ce que** l'enveloppe tubulaire se rétracte lors du préséchage et que sa faculté d'allongement diminue.

6. Procédé selon une quelconque des revendications 1 à 5, **caractérisé en ce que**, à la sortie d'une zone de préséchage, l'enveloppe tubulaire cellulosique est transportée de façon à effectuer un virage de 180° pour ainsi traverser ladite zone de préséchage deux fois.

7. Procédé selon la revendication 6, **caractérisé en ce que** l'enveloppe tubulaire cellulosique traverse la zone de préséchage verticalement.

8. Procédé selon la revendication 6, **caractérisé en ce que** l'enveloppe tubulaire cellulosique traverse la zone de préséchage horizontalement.

9. Procédé selon la revendication 1, **caractérisé en ce que** le préséchage est effectué dans une zone de préséchage d'une longueur pouvant atteindre 12 m et que le préséchage est effectué au moyen d'air chaud dont la température peut atteindre jusqu'à 130 °C.

10. Procédé selon la revendication 9, **caractérisé en ce que** la vitesse de transport de l'enveloppe tubulaire cellulosique, la longueur de la zone de préséchage ainsi que la température de l'air peuvent être ajustées de façon à ce que, à la sortie de la zone de préséchage, le taux d'humidité dans ladite enveloppe tubulaire cellulosique préséchée soit compris entre 40 et 60 % par rapport à l'humidité dans l'enveloppe tubulaire cellulosique non-séchée.

11. Procédé selon la revendication 1, **caractérisé en ce que** l'enveloppe tubulaire cellulosique préséchée est séchée à l'état gonflé, entre deux paires de rouleaux de coincement, au moyen d'air chaud jusqu'à ce qu'elle atteigne un taux d'humidité d'au plus 10 % par rapport à l'humidité dans l'enveloppe tubulaire cellulosique non-séchée.

12. Dispositif destiné à la production d'une enveloppe tubulaire cellulosique (2) qui est comestible et qui ne présente pas de ligne de joint, ladite enveloppe étant extrudée à travers une filière annulaire (3) puis introduite, à travers une fente d'appel d'air, dans un bain d'eau (4) pour y subir un changement de direction de transport avant d'être sortie dudit bain d'eau et transportée par un convoyeur à bande (1) à travers une première et une deuxième zone de lavage (9, 11) dans une zone de plastification (12), **caractérisé en ce que** l'enveloppe tubulaire cellulosique (2) peut être transportée, à partir de la zone de plastification (12) dans un dispositif de préséchage (13) qui est monté en amont d'un dispositif principal de séchage (19), le dispositif de préséchage (13) pouvant être disposé verticalement ou horizontalement.

13. Dispositif selon la revendication 12, **caractérisé en ce que** le dispositif de préséchage (13) peut présenter une longueur jusqu'à 12 m.

14. Dispositif selon la revendication 13, **caractérisé en ce qu'**un rouleau destiné à changer la direction de transport (14) est disposé à la sortie (23) du dispositif de préséchage (13), l'enveloppe tubulaire cellulosique (2) passant par ledit rouleau pour y effectuer un changement de direction de 180° et traverser ainsi le dispositif de préséchage (13) encore une fois puis en sortir par l'entrée (24).

15. Dispositif selon la revendication 14, **caractérisé en ce que** l'enveloppe tubulaire cellulosique (2) passe, après être sortie du dispositif de préséchage (13), par une paire de rouleaux (15) où, moyennant un des rouleaux de la paire de rouleaux, sa direction de transport est changée de manière à ce qu'elle avance vers le dispositif principal de séchage (19).

16. Dispositif selon la revendication 13, **caractérisé en ce que**, dans le dispositif de préséchage (13), de l'air chauffé peut être soufflé sur l'enveloppe tubulaire cellulosique (2) qui se présente à l'état plat.

17. Dispositif selon la revendication 16, **caractérisé en ce que** l'air soufflé peut être chauffé jusqu'à une température de 130 °C.

18. Dispositif selon la revendication 15, **caractérisé en ce qu'**une imprégnation peut être appliquée à l'intérieur de l'enveloppe tubulaire cellulosique (2) avant que celle-ci n'entre dans le dispositif principal de séchage (19).

19. Dispositif selon la revendication 12, **caractérisé en ce que**, dans le dispositif principal de séchage (19), deux paires de rouleaux de coincement (21, 22) sont disposées et que l'enveloppe tubulaire cellulosique (2) peut être gonflée avec de l'air chaud de façon à prendre la forme d'un tuyau (20) lorsqu'elle se trouve entre les deux paires de rouleaux de coincement (21, 22).

20. Dispositif selon la revendication 19, **caractérisé en ce que** l'enveloppe tubulaire cellulosique en forme de tuyau (20) peut être séchée à l'état gonflé de manière à ce que son taux d'humidité atteigne au plus 10 % par rapport à l'humidité dans l'enveloppe tubulaire cellulosique (2) non-séchée et qu'elle puisse se rétracter pour atteindre son calibre final.

21. Dispositif selon la revendication 18, **caractérisé en ce que** l'intérieur de l'enveloppe tubulaire cellulosique (2) est imprégné au moyen d'une solution aqueuse d'imprégnation contenant 2 % en poids d'un distéaryl-dicétène.
